(19) Europäisches Patentamt / European Patent Office / Office européen des brevets

(11) **EP 4 050 569 A1**

(12) **EUROPEAN PATENT APPLICATION**

(43) Date of publication:
**31.08.2022 Bulletin 2022/35**

(21) Application number: **22159078.9**

(22) Date of filing: **28.02.2022**

(51) International Patent Classification (IPC):
**G06V 10/44** $^{(2022.01)}$ **G06V 30/19** $^{(2022.01)}$
**G06V 30/244** $^{(2022.01)}$ **G06F 40/109** $^{(2020.01)}$

(52) Cooperative Patent Classification (CPC):
**G06F 40/109; G06V 10/454; G06V 30/19147; G06V 30/244**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.09.2021 CN 202111057836**

(71) Applicant: **Beijing Baidu Netcom Science and Technology Co., Ltd. Beijing 100085 (CN)**

(72) Inventors:
- LIU, Jiaming
  BEIJING, 100085 (CN)
- TANG, Licheng
  BEIJING, 100085 (CN)

(74) Representative: **Regimbeau 20, rue de Chazelles 75847 Paris Cedex 17 (FR)**

(54) **MODEL TRAINING METHOD AND APPARATUS, FONT LIBRARY ESTABLISHMENT METHOD AND APPARATUS, DEVICE AND STORAGE MEDIUM**

(57) A method for training a font generation model is described below. A source domain sample character and a target domain association character are input into an encoder of the font generation model to obtain a sample character content feature and an association character style feature (S201, S301, S401). The sample character content feature and the association character style feature are input into an attention mechanism network to obtain a target domain style feature (S202, S402). The sample character content feature and the target domain style feature are input into a decoder to obtain a target domain generation character (S203, S306, S403). The target domain generation character and at least one of a target domain sample character or the target domain association character are input into a loss analysis network of the font generation model to obtain a model loss, and a parameter of the font generation model is adjusted according to the model loss (S204, S307).

**EP 4 050 569 A1**

## Description

TECHNICAL FIELD

The present disclosure relates to the technical field of artificial intelligence, in particular, to the technical field of computer vision and deep learning, and may be applied to optical character recognition (OCR) and other scenes.

BACKGROUND

With the development of the Internet and the increase of people's individual requirements, the generation of custom style fonts has gradually emerged.

The process of font generation is essentially the process of image style transfer, that is, an image is converted into an image of another style while the content is kept unchanged. For example, the character "你" of the standard regular script style is converted into the character "你" of the user handwriting style.

SUMMARY

The present disclosure provides a model training method and apparatus, a font library establishment method and apparatus, a device and a storage medium.

According to an aspect of the present disclosure, a method for training a font generation model is provided. The method includes steps described below.

A source domain sample character and a target domain association character of the source domain sample character are input into an encoder of the font generation model to obtain a sample character content feature and an association character style feature.

The sample character content feature and the association character style feature are input into an attention mechanism network of the font generation model to obtain a target domain style feature.

The sample character content feature and the target domain style feature are input into a decoder of the font generation model to obtain a target domain generation character.

The target domain generation character and at least one of a target domain sample character or the target domain association character are input into a loss analysis network of the font generation model to obtain a model loss, and a parameter of the font generation model is adjusted according to the model loss.

According to another aspect of the present disclosure, a method for establishing a font library is provided. The method includes steps described below.

A source domain input character is input into a font generation model to obtain a target domain new character.

The font library is established based on the target domain new character.

The font generation model is obtained by training according to the method for training a font generation model of any embodiment of the present disclosure.

According to another aspect of the present disclosure, an electronic device is provided. The electronic device includes at least one processor and a memory communicatively connected to the at least one processor.

The memory stores instructions executable by the at least one processor, and the instructions are executed by the at least one processor to cause the at least one processor to perform the method for training a font generation model and/or the method for establishing a font library of any embodiment of the present disclosure.

According to another aspect of the present disclosure, a computer-readable storage medium is provided. The storage medium stores computer instructions for causing a computer to perform the method for training a font generation model and/or the method for establishing a font library of any embodiment of the present disclosure.

The technology of the present disclosure provides a new idea for training a font generation model with a few samples, and the accuracy of model training is improved.

It is to be understood that the content described in this part is neither intended to identify key or important features of embodiments of the present disclosure nor intended to limit the scope of the present disclosure. Other features of the present disclosure are apparent from the description provided hereinafter.

BRIEF DESCRIPTION OF DRAWINGS

The drawings are intended to provide a better understanding of the solution and not to limit the present disclosure.

FIG. 1 is a schematic diagram of an exemplary system architecture to which a method for training a font generation model and/or a method for establishing a font library may be applied according to an embodiment of the present disclosure;

FIG. 2A is a flowchart of a method for training a font generation model according to an embodiment of the present disclosure;

FIG. 2B is a structural diagram of a font generation model according to an embodiment of the present disclosure;

FIG. 3A is a schematic diagram showing an internal structure of an attention mechanism network of a font generation model according to an embodiment of the present disclosure;

FIG. 3B is a flowchart of another method for training a font generation model according to an embodiment of the present disclosure;

FIG. 4A is a structural diagram of another font generation model according to an embodiment of the present disclosure;

FIG. 4B is a flowchart of another method for training a font generation model according to an embodiment of the present disclosure;

FIG. 5 is a flowchart of a method for establishing a font library according to an embodiment of the present disclosure;

FIG. 6 is a structural diagram of an apparatus for training a font generation model according to an embodiment of the present disclosure;

FIG. 7 is a structural diagram of an apparatus for establishing a font library according to an embodiment of the present disclosure; and

FIG. 8 is a block diagram of an electronic device for implementing a method for training a font generation model and/or a method for establishing a font library according to an embodiment of the present disclosure.

DETAILED DESCRIPTION

Example embodiments of the present disclosure, including details of embodiments of the present disclosure, are described hereinafter in conjunction with the drawings to facilitate understanding. The example embodiments are merely illustrative. Font generation is an emerging task in the field of image style transfer. Image style transfer refers to the conversion of an image into an image of another style while the content is kept unchanged. Image style transfer is a popular research direction in deep learning applications.

At present, generative adversarial network (GAN) models may be adopted to implement font generation. However, in font generation schemes based on the GAN models, through the network trained with a relatively small amount of data, only some relatively weak features, such as tilt, size and part of strokes, can be learned, while the most user-style features cannot be learned. The network trained with a relatively large amount of data may also be used. Through this kind of network, however, although the learned style can be relatively strong, incorrect characters are easy to generate for Chinese characters outside the training set. According to these mainstream research results, font-level effect is difficult to achieve.

The embodiments of the present disclosure provide a method for training a font generation model and a method for establishing a font library using the font generation model. In the process of training a font generation model to perform the task of font style transfer between a source domain and a target domain, an attention mechanism network is introduced to determine the overall style feature of the target domain, that is, a target domain style feature, so that the accuracy of the target domain style feature is improved. Further, the capability of the font generation model to perform font style transfer is improved. When less target domain sample data is provided, or the source domain font does not conform to the font distribution style, the beautiful and correct font still can be generated, so that the accuracy of the model is improved.

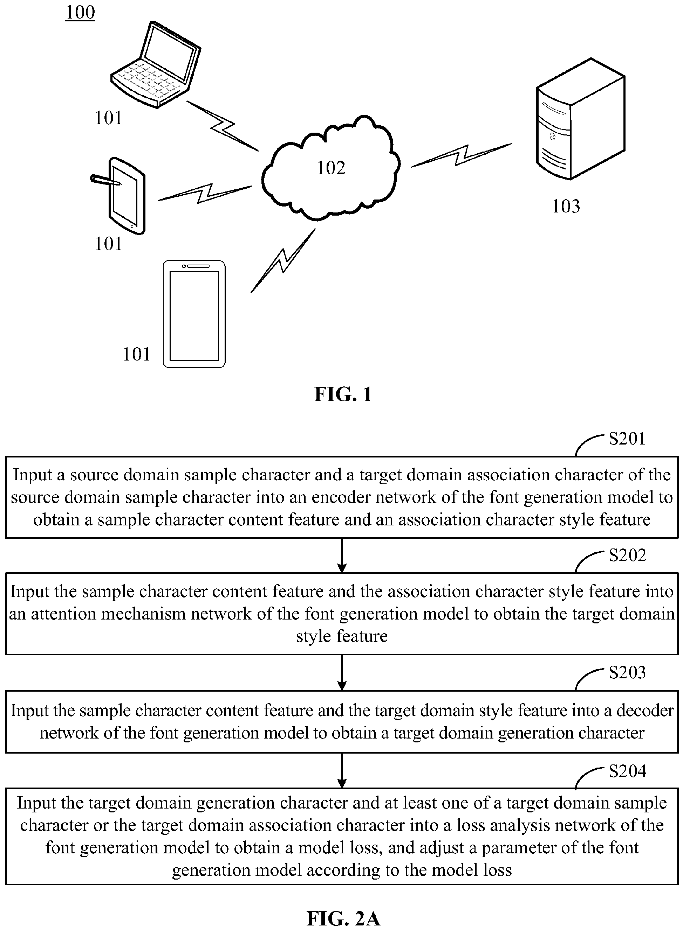

FIG. 1 is a schematic diagram of an exemplary system architecture to which a method for training a font generation model and/or a method for establishing a font library may be applied according to an embodiment of the present disclosure. It should be noted that FIG. 1 is merely an example of a system architecture to which the embodiment of the present disclosure may be applied to help those skilled in the art understand the technical content of the present disclosure, and it does not mean that the embodiment of the present disclosure cannot be used in other devices, systems, environments or scenes.

As shown in FIG. 1, the system architecture 100 according to the embodiment may include multiple terminal devices 101, a network 102 and a server 103. The network 102 is configured to provide a medium of a communication link between the terminal devices 101 and the server 103. The network 102 may include various connection types, such as wired and/or wireless communication links and the like.

A user may use a terminal device 101 to interact with the server 103 through the network 102 to receive or send messages and the like. The terminal devices 101 may be various electronic devices, including but not limited to smart phones, tablet computers, laptop portable computers and the like.

The method for training a font generation model and/or a method for establishing a font library provided by the embodiment of the present disclosure may generally be performed by the server 103. Correspondingly, an apparatus for training a font generation model and/or an apparatus for establishing a font library provided by the embodiment of the present disclosure may generally be disposed in the server 103. The method for training a font generation model and/or the method for establishing a font library provided by the embodiment of the present disclosure may also be performed by a server or server cluster that is different from the server 103 and capable of communicating with the terminal devices 101 and/or the server 103. Correspondingly, the apparatus for training a font generation model and/or the apparatus for establishing a font library provided by the embodiment of the present disclosure may also be disposed in a server or server cluster that is different from the server 103 and capable of communicating with the terminal devices 101 and/or the server 103.

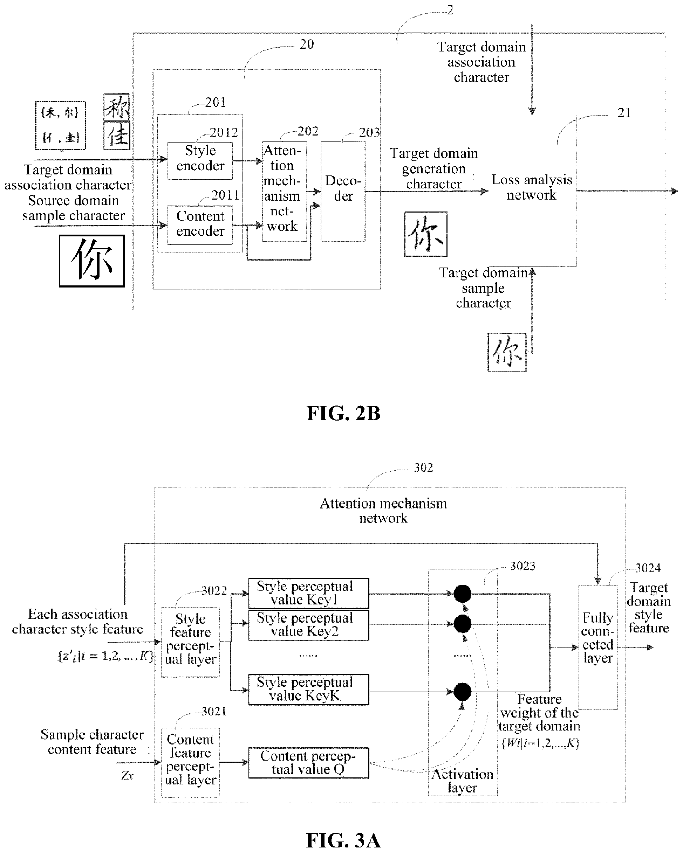

FIG. 2A is a flowchart of a method for training a font generation model according to an embodiment of the present disclosure, and FIG. 2B is a structural diagram of a font generation model according to an embodiment of the present disclosure. The embodiment of the present disclosure is applicable to the case of training a font generation model for performing the task of font style transfer, and in particular, to the case of training a font generation model for performing the task of font style transfer based on a small amount of sample data. The method may be performed by an apparatus for training a font generation model. The apparatus may be implemented by means of software and/or hardware. As shown in FIGS. 2A to 2B, the method for training a font generation model provided by the embodiment may include steps described below.

In step S201, a source domain sample character and a target domain association character of the source domain sample character are input into an encoder of the font generation model to obtain a sample character content feature and an association character style feature.

The source domain sample character may be an image having the source domain font style, and the source domain style font may be regular fonts such as regular script, Song or bold. The target domain association character may be an image having the target domain font style and capable of covering radicals of the source domain sample character. The target domain font style may be the user handwriting font style or other artistic font styles. It should be noted that the number of target domain association characters in the embodiment may be one or more, preferably more. For example, if the source domain sample character is "你", corresponding radicals include "亻" and "尔", and the target domain association character may be images of all characters having the target domain font style and containing "亻" or "尔", such as "称" and "佳". The sample character content feature may be a feature that characterizes the font content (for example, a character type and a component type) of the source domain sample character. The association character style feature may be a feature that characterizes the font style of each target domain association font.

As shown in FIG. 2B, the font generation model 2 of the embodiment is a neural network model that transfers the source domain sample character from the source domain style font to the target domain style font. The font generation model 2 may include a font generation network 20 and a loss analysis network 21. The font generation network 20 is configured to perform the task of font style transfer, that is, the font generation network 20 is a backbone network of the font generation model. The font generation network 20 specifically includes an encoder 201, an attention mechanism network 202 and a decoder 203. The encoder 201 is configured to encode the content feature of the source domain sample character and encode the style feature of the target domain association character, so that the encoder 201 may further include a content encoder 2011 and a style encoder 2012. The attention mechanism network 202 is configured to analyze the importance of each style classification head position in the target domain style feature to accurately determine the target domain style feature. The decoder 204 is configured for decoding to obtain a style-transferred generation character based on the content feature and the style feature. The loss analysis network 21 is configured in a model training stage to calculate a loss function of the model during the training process, so that the model performs parameter adjustment based on the loss function.

Optionally, in the embodiment, when one time of iterative training task is performed, a batch of target domain association characters covering radicals of a source domain sample character may be obtained based on the source domain sample character, and then the source domain sample character and the target domain association characters are input into the encoder 201 of the font generation network 20 of the font generation model 2. Specifically, the source domain sample character may be input into the content encoder 2011 of the encoder 201, and the target domain association characters are input into the style encoder 2012 of the encoder 201. The content encoder 2011 encodes the font content of the input source domain sample character to obtain the sample character content feature. The style encoder 2012 encodes the font style of the input target domain association characters to obtain association character style features. It should be noted that in the embodiment, the corresponding association character style feature is determined for each target domain association character. For example, as shown in FIG. 2B, the character "你" of the Song style (that is, the source domain sample character) is input into the content encoder 2011 to obtain the content feature of the character "你" of the Song style; and the character "称" and "佳" of the handwriting style (that is, the target domain association characters) are input into the style encoder 2012 to obtain the association character style feature 1 of the character "称" of the handwriting style and the association character style feature 2 of the character "佳" of the handwriting style, respectively.

In step S202, the sample character content feature and the association character style feature are input into an attention mechanism network of the font generation model to obtain the target domain style feature.

The target domain style feature may be a feature that characterizes the overall style of the target domain.

As shown in FIG. 2B, the association character style feature is the style feature of each target domain association character corresponding to the target domain, so that the association character style feature can only represent a part of the style feature of the target domain. In the embodiment, it is necessary to integrate the style feature of each target domain association character corresponding to the target domain based on the attention mechanism network 202 to obtain the overall style feature of the target domain, that is, the target domain style feature. Specifically, the sample character content feature and the association character style feature encoded by the encoder 201 may both be input into the attention mechanism network 202, and the attention mechanism network 202 sequentially analyzes each association character style feature based on the sample character content feature, and then integrates each association character style feature into a feature vector that characterizes the target domain style, that is, the target domain style feature.

In step S203, the sample character content feature and the target domain style feature are input into a decoder of the font generation model to obtain a target domain generation character.

The target domain generation character may be an image generated by the font generation model and having the content of the source domain sample character and the font style of the target domain association character. For example, if the source domain sample character is " 你 ", the target domain font style is the user handwriting font style, and thus the target domain generation character may be " 你 " of the user handwriting font style.

As shown in FIG. 2B, in the embodiment, the sample character content feature encoded by the encoder 201 (specifically, the content encoder 2011) and the target domain style feature integrated by the attention mechanism network 202 may both be input into the decoder 203, and the decoder 203 decodes the target domain style feature and the sample character content feature, and, based on decoding results, performs fusion to obtain the target domain generation character (such as the character " 你 " of the handwriting style) having the content of the source domain sample character and the font style of the target domain association character.

In step S204, the target domain generation character and at least one of a target domain sample character or the target domain association character are input into a loss analysis network of the font generation model to obtain a model loss, and a parameter of the font generation model is adjusted according to the model loss.

The target domain sample character may be an actual image having the content of the source domain sample character and the font style of the target domain association character. The target domain sample character is the standard character corresponding to the target domain generation character. For example, if the source domain sample character is " 你 " and the target domain is the user handwriting style font, the target domain sample character may be the character " 你 " actually handwritten by the user. The target domain generation character is the user's handwritten character " 你 " predicted by the font generation model. The model loss is a loss function calculated during model training based on the target domain association character and the source domain sample character in steps S201 to S203.

The loss analysis network of the font generation model of the embodiment may include at least one subnetwork that analyzes at least one type of loss function, that is, the model loss determined based on the loss analysis network may include at least one type of loss function value. For example, the loss analysis network of the font generation model may analyze the consistency of the character content of the target domain sample character and the character content of the target domain generation character to generate a character classification loss, analyze the consistency of the font style of the target domain sample character and the font style of the target domain generation character to generate a style classification loss, analyze the consistency of radicals (that is, components) of the target domain association character and radicals of the target domain generation character to generate a component classification loss, analyze an incorrect character loss of whether the target domain generation character to generate an incorrect character loss, etc. In the embodiment, after the model loss is calculated through the loss analysis network, the parameter value of the font generation model is adjusted based on the model loss.

It should be noted that in the solution of the embodiment of the present disclosure, multiple times of iterative training needs to be performed on the model based on multiple groups of source domain sample characters until a preset training stopping condition is reached. At this time, the adjustment of the parameter of the font generation model is stopped, and a trained font generation model is obtained. The training stopping condition may include conditions below. The number of times of training reaches a preset number, or the model loss converges.

It should further be noted that the character (such as the source domain sample character, the target domain association character and the target domain sample character) input into the font generation model may be input in the form of an image, and the image corresponding to the character input into the font generation model may be from a public data set or obtained after relevant authorization.

In the solution of the embodiment of the present disclosure, during the process of training the font generation model, the association character style feature of the target domain and the sample character content feature which are determined based on the encoder need to be input into the attention mechanism network to determine the target domain style feature, and the target domain generation character is obtained based on the target domain style feature and the sample character content feature. Then, the model loss is calculated based on the target domain generation character and at least one of the target domain sample character or the target domain association character to adjust the parameter of the model. In the solution, during the process of training the font generation model to perform the task of font style transfer between the source domain and the target domain, the attention mechanism network is introduced to determine the overall style feature of the target domain, that is, the target domain style feature, so that the accuracy of the target domain style feature is improved. Further, the capability of the font generation model to perform font style transfer is improved. When less target domain sample data is provided, or the source domain font does not conform to the font distribution style, the beautiful and correct font still can be generated, so that the accuracy of the model is improved. In this way, a new idea is provided for training a font generation model with a few samples.

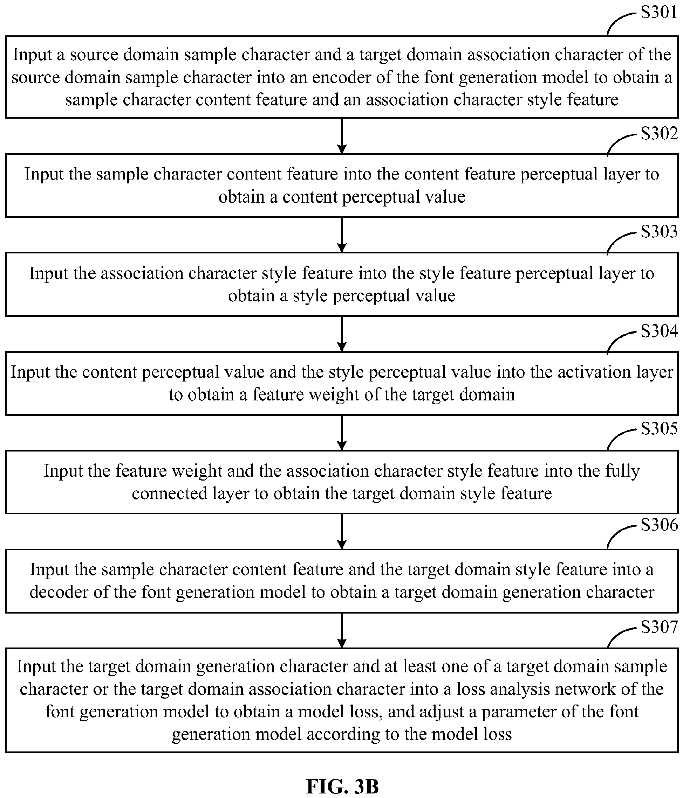

FIG. 3A is a schematic diagram showing an internal structure of an attention mechanism network of a font generation model according to an embodiment of the present disclosure. As shown in FIG. 3A, the attention mechanism network 302 in the embodiment includes a content feature perceptual layer 3021, a style feature perceptual layer 3022, an activation layer 3023 and a fully connected layer 3024. FIG. 3B is a flowchart of a method for training a font generation model according to an embodiment of the present disclosure. Based on the preceding embodiments, the embodiment of the present disclosure further explains in detail how to "input the sample character content feature and the association character style feature into the attention mechanism network of the font generation model to obtain the target domain style feature" in conjunction with the attention mechanism network 302 shown in FIG. 3A. As shown in FIGS. 3A to 3B, the method for training a font generation model provided by the embodiment may include steps described below.

In step S301, a source domain sample character and a target domain association character of the source domain sample character are input into an encoder of the font generation model to obtain a sample character content feature and an association character style feature.

In step S302, the sample character content feature is input into the content feature perceptual layer to obtain a content perceptual value.

The content feature perceptual layer MLP1 may be constructed by multiple fully connected layers connected end to end. The content feature perceptual layer MLP1 is configured to perform abstract extraction on the sample character content feature to obtain a perceptual value, that is, the content perceptual value.

Specifically, as shown in FIG. 3A, the sample character content feature $Z_x$ obtained in step S301 through the encoder may be input into the content feature perceptual layer MLP1 3021, and at this time, the content feature perceptual layer MLP1 3021 samples and extracts the content perceptual value Q from the sample character content feature, that is, $Q=MLP1(Z_x)$.

In step S303, the association character style feature is input into the style feature perceptual layer to obtain a style perceptual value.

The style feature perceptual layer MLP2 may also be constructed by multiple fully connected layers connected end to end. The layer structure of the style feature perceptual layer MLP2 may be the same as or different from the layer structure of the content feature perceptual layer MLP1. The style feature perceptual layer MLP2 is configured to perform abstract extraction on the association character style feature to obtain the feature perceptual value.

Specifically, as shown in FIG. 3A, since multiple target domain association characters may be provided in the embodiment, in step S301, an association character style feature is generated for each target domain association character through the encoder. It is assumed that K target domain association characters are provided, and the association character style feature input into the style feature perceptual layer 3022 is $Z'_i$, where i=1, 2, ..., K. Correspondingly, the style feature perceptual layer 3022 generates a style perceptual value $Key_i$ based on each association character style feature $Z'_i$, where i=1, 2, ..., K, that is, $Key_i=MLP2(Z'_i)$

In step S304, the content perceptual value and the style perceptual value are input into the activation layer to obtain a feature weight of the target domain.

Specifically, as shown in FIG. 3A, the content perceptual value Q and the style perceptual value $Key_i$ are input into the activation layer 3023, and the activation layer 3023 sequentially convolves and normalizes the content perceptual layer Q and each style perceptual value $Key_i$ to obtain the feature weight $W_i$ of the target domain, where i=1, 2, ..., K, that is, $W_i=softmax(Q*Key_i)$.

In step S305, the feature weight and the association character style feature are input into the fully connected layer to obtain the target domain style feature.

Specifically, as shown in FIG. 3A, the feature weight $W_i$ of the target domain and the association character style feature $Z'_i$ are input into the fully connected layer 3024, and the fully connected layer 3024 performs weighted sum on each association character style feature and the feature weight corresponding to the each association character style feature to obtain the target domain style feature.

In step S306, the sample character content feature and the target domain style feature are input into a decoder of the font generation model to obtain a target domain generation character.

In step S307, the target domain generation character and at least one of a target domain sample character or the target domain association character are input into a loss analysis network of the font generation model to obtain a model loss, and a parameter of the font generation model is adjusted according to the model loss.

In the solution of the embodiment, through the attention mechanism including the perceptual layer, the activation layer and the fully connected layer, the weight value of a position element in the target domain style feature is analyzed, and the target domain style feature is determined in combination with the weight value. In this way, compared with the manner of determining the target domain style feature by calculating a mean value, the impact of a non-sample character component of the target domain association character on the target domain style feature is greatly reduced, the accuracy of the target domain style feature is improved, and then the accuracy of the font generation model performing font style transfer is improved.

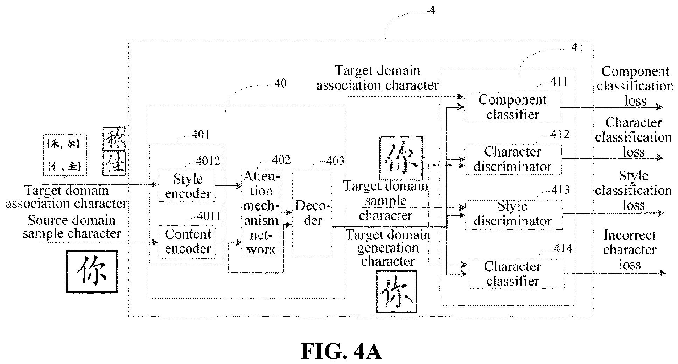

FIG. 4A is a structural diagram of another font generation model according to an embodiment of the present disclosure. As shown in FIG. 4A, in the embodiment of the present disclosure, the loss analysis network 41 of the font generation model 4 includes at least one of a component classifier 411, a character discriminator 412, a style discriminator 413 or a character classifier 414. The component classifier 411 is configured to calculate a component classification loss, the character discriminator 412 is configured to calculate a character classification loss, the style discriminator 413 is configured to calculate a style classification loss, and the character classifier 414 is configured to calculate an incorrect character loss. Therefore, in the embodiment, the model loss includes at least one of the component classification loss, the character classification loss, the style classification loss or the incorrect character loss. In this way, the model is trained through multiple different types of losses, so that the accuracy of results of model training is greatly improved.

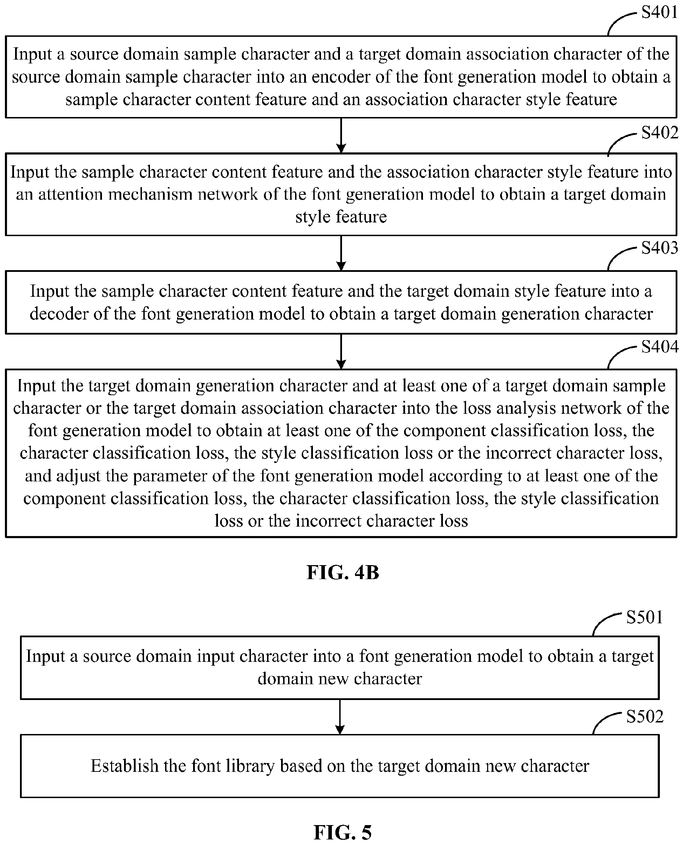

FIG. 4B is a flowchart of a method for training a font generation model according to an embodiment of the present disclosure. Based on the preceding embodiments, the embodiment of the present disclosure further explains in detail how to calculate the model loss and how to adjust the parameter of the font generation model based on the model loss in combination with the loss analysis network 41 shown in FIG. 4A. As shown in FIGS. 4A to 4B, the method for training a font generation model provided by the embodiment may include steps described below.

In step S401, a source domain sample character and a target domain association character of the source domain sample character are input into an encoder of the font generation model to obtain a sample character content feature and an association character style feature.

In step S402, the sample character content feature and the association character style feature are input into an attention mechanism network of the font generation model to obtain a target domain style feature.

In step S403, the sample character content feature and the target domain style feature are input into a decoder of the font generation model to obtain a target domain generation character.

In step S404, the target domain generation character and at least one of a target domain sample character or the target domain association character are input into the loss analysis network of the font generation model to obtain at least one of the component classification loss, the character classification loss, the style classification loss or the incorrect character loss, and the parameter of the font generation model is adjusted according to at least one of the component classification loss, the character classification loss, the style classification loss or the incorrect character loss.

Next, the method for calculating each type of loss in step S404 and the process of how to train the model based on the loss are introduced in turn.

First, the process of determining the component classification loss may include steps described below. The target domain association character and the target domain generation character are input into the component classifier to obtain a component vector of the target domain generation character and a component vector of the target domain association character. The component classification loss is determined according to the difference between the component vector of the target domain generation character and the component vector of the target domain association character.

The component vector may be an N-dimensional vector, where N is the number of all components contained in a component table, that is, the number of all radicals. Each element in the component vector represents a component in the component table. If the input character contains the component, the element is the first value (such as 1); if the input character does not contain the component, the element is the second value (such as 0). Therefore, the component classifier may predict whether the input character contains a preset radical (that is, a component) through the generated component vector.

Specifically, in the embodiment, the target domain association character and the target domain generation character may be input into the component classifier 411, and the component classifier 411 generates an N-dimensional component vector, such as a component vector 1 and a component vector 2, for each input target domain association character and target domain generation character, and then calculates the value of the component classification loss based on the difference between the N-dimensional component vector 1 and the N-dimensional component vector 2. For example, the cross entropy of the two component vectors is calculated as the value of the classification loss. After the value of the component classification loss is calculated, the parameter of the font generation model 4 may be adjusted with the value of the component classification loss as a constraint, so that correct component classification can be performed on characters of all styles through the component classifier 411. In the embodiment, during the process of training the font generation model, the component classification loss is introduced. In this way, it is ensured that correct component classification can be performed on characters of all styles through the component classifier, and further, it is ensured that the target domain generation character retains the component (that is, the component shared by multiple target domain association characters) of the target domain association character.

Second, the process of determining the character classification loss may include steps described below.

In sub-step A, the target domain sample character and the target domain generation character are input into the character discriminator to obtain a first character loss value of the character classification loss, and a parameter of the character discriminator is adjusted based on the first character loss value.

Specifically, as shown in FIG. 4A, in the sub-step, the target domain sample character and the target domain generation character may be input into the character discriminator 412 to obtain a character classification head position of the target domain generation character and a character classification head position of the target domain sample character, and the first character loss value of the character classification loss is determined according to the character classification head position of the target domain generation character and the character classification head position of the target domain sample character.

In the embodiment, the training sample may contain images of M (such as 6700) characters. The M characters may constitute an M-dimensional vector, that is, a character classification head vector. Each element in the vector corresponds to a character, and the position of the element in the character classification head vector is the character classification head position. In the embodiment, the character discriminator 412 determines the corresponding character classification head position X for the target domain sample character and the corresponding character classification head position X* for the target domain generation character. The first character loss value of the character classification loss is calculated based on formula (1) below. After the first character loss value is determined, one time of parameter adjustment is performed on the parameter of the character discriminator 412 based on the first character loss value.

$$L_{adv}^{char}1=(X-1)^2+(X^*-0)^2 \qquad (1).$$

$L_{adv}^{char}1$ represents the first character loss value of the character classification loss, X represents the character classification head position of the target domain sample character, and X* represents the character classification head position of the target domain generation character.

In sub-step B, the target domain generation character is input into the adjusted character discriminator to obtain a second character loss value of the character classification loss, and a parameter of a font generation network is adjusted based on the second character loss value.

Specifically, as shown in FIG. 4A, in the sub-step, the target domain generation character may be input into the adjusted character discriminator 412 to update the character classification head position of the target domain generation character, and the second character loss value of the character classification loss is determined according to the updated character classification head position.

In the embodiment, after the parameter of the character discriminator 412 is updated once through sub-step A, the updated character discriminator 412 re-performs the operation of determining the character classification head position of the target domain generation character, that is, updates the character classification head position X*. The second character loss value of the character classification loss is calculated based on formula (2) below. After the second character loss value is determined, one time of parameter adjustment is performed on the parameter of the font generation network 40 based on the second character loss value. The font generation network 40 includes an encoder 401, an attention mechanism network 402 and a decoder 403. The encoder 401 further includes a content encoder 4011 and a style encoder 4012.

$$L_{adv}^{char}2=(X^*-1)^2 \qquad (2).$$

$L_{adv}^{char}2$ represents the second character loss value of the character classification loss, and X* represents the character classification head position of the target domain generation character. It should be noted that X* at this time represents the updated character classification head position of the adjusted character discriminator 412.

In sub-step C, the target domain sample character and the target domain generation character updated based on the adjusted font generation network are input into the adjusted character discriminator to update the first character loss value, and the parameter of the character discriminator is readjusted based on the updated first character loss value.

Specifically, as shown in FIG. 4A, in the sub-step, the source domain sample character and the target domain association character may be re-input into the font generation network 40 adjusted after sub-step B to update the target domain generation character, then the updated target domain generation character and the target domain sample character are re-input into the character discriminator 412 adjusted after sub-step A to update the character classification head position X* of the target domain generation character and the character classification head position X of the target domain sample character, the first character loss value is updated based on formula (1), and the parameter of the character discriminator 412 is readjusted based on the updated first character loss value.

In the embodiment, during the process of training the font generation model, the character classification loss is introduced, and the character discriminator 412 and the font generation network 40 are alternatively and iteratively trained, so that the accuracy of the parameter of the font generation network 40 and parameter of the character discriminator 412 is greatly improved.

Third, the process of determining the style classification loss may include steps described below.

In sub-step D, the target domain sample character and the target domain generation character are input into the style discriminator to obtain a first style loss value of the style classification loss, and a parameter of the style discriminator is adjusted based on the first style loss value.

Specifically, as shown in FIG. 4A, in the sub-step, the target domain sample character and the target domain generation character may be input into the style discriminator 413 to obtain a style classification head position of the target domain generation character and a style classification head position of the target domain sample character, and the first style loss value of the style classification loss is determined according to the style classification head position of the target domain generation character and the style classification head position of the target domain sample character.

In the embodiment, the training sample may contain S (such as 80) style fonts. The S styles may constitute an S-dimensional vector, that is, a style classification head vector. Each element in the vector corresponds to a style, and the position of the element in the style classification head vector is the style classification head position. In the embodiment, the style discriminator 413 determines the corresponding style classification head position Y for the target domain sample character and the corresponding style classification head position Y* for the target domain generation character. The first style loss value of the style classification loss is calculated based on formula (3) below. After the first style loss value is determined, one time of parameter adjustment is performed on the parameter of the style discriminator 413 based on the first style loss value.

$$L_{adv}^{style}1=(Y-1)^2+(Y^*-0)^2 \qquad (3).$$

$L_{adv}^{style}1$ represents the first style loss value of the style classification loss, Y represents the style classification head position of the target domain sample character, and Y* represents the style classification head position of the target domain generation character.

In sub-step E, the target domain generation character is input into the adjusted style discriminator to obtain a second style loss value of the style classification loss, and the parameter of the font generation network is adjusted based on the second style loss value.

Specifically, as shown in FIG. 4A, in the sub-step, the target domain generation character may be input into the adjusted style discriminator 413 to update the style classification head position of the target domain generation character, and the second style loss value of the style classification loss is determined according to the updated style classification head position.

In the embodiment, after the parameter of the style discriminator 413 is updated once through sub-step D, the updated style discriminator 413 re-performs the operation of determining the style classification head position of the target domain generation character, that is, updates the style classification head position Y*. The second style loss value of the style classification loss is calculated based on formula (4) below. After the second style loss value is determined, one time of parameter adjustment is performed on the parameter of the font generation network 40 based on the second style loss value. The font generation network 40 includes an encoder 401, an attention mechanism network 402 and a decoder 403. The encoder 401 further includes a content encoder 4011 and a style encoder 4012.

$$L_{adv}^{style}2=(Y^*-1)^2 \qquad (4).$$

$L_{adv}^{style}2$ represents the second style loss value of the style classification loss, and Y* represents the style classification head position of the target domain generation character. It should be noted that Y* at this time represents the updated style classification head position of the adjusted style discriminator 413.

In sub-step F, the target domain sample character and the target domain generation character updated based on the adjusted font generation network are input into the adjusted style discriminator to update the first style loss value, and the parameter of the style discriminator is readjusted based on the updated first style loss value.

Specifically, as shown in FIG. 4A, in the sub-step, the source domain sample character and the target domain association character may be re-input into the font generation network 40 adjusted after sub-step E to update the target domain generation character, then the updated target domain generation character and the target domain sample character are re-input into the style discriminator 413 adjusted after sub-step D to update the style classification head position Y* of the target domain generation character and the style classification head position Y of the target domain sample character, the first style loss value is updated based on formula (3), and the parameter of the style discriminator 413 is readjusted based on the updated first style loss value.

In the embodiment, during the process of training the font generation model, the style classification loss is introduced, and the style discriminator 413 and the font generation network 40 are alternatively and iteratively trained, so that the accuracy of the parameter of the font generation network 40 and parameter of the style discriminator 413 is greatly improved.

Fourth, the process of determining the incorrect character loss may include steps described below. The target domain sample character and the target domain generation character are input into the character classifier to obtain a character classification head vector of the target domain sample character and a character classification head vector of the target domain generation character. The incorrect character loss is determined according to the difference between the character classification head vector of the target domain sample character and the character classification head vector of the target domain generation character.

Specifically, as shown in FIG. 4A, the target domain sample character and the target domain generation character are input into the character classifier 414, and the character classifier 414 determines the corresponding character classification head vector $\overline{X}$ satisfying that $\overline{X}=[x_0, x_1 ...... x_i ...... x_m]$ for the target domain sample character and the corresponding character classification head vector $\overline{Y}$ satisfying that $\overline{Y}=[y_0, y_1 ...... y_i ...... y_m]$ for the target domain generation character. Each element in the vector $\overline{X}$ and each element in the vector $\overline{Y}$ may represent a character in the training sample, and m represents the number of characters in the training sample. For example, the training sample has 6761 characters, and m may equal to 6760. Then, the incorrect character loss is calculated according to the difference between the character classification head vector $\overline{X}$ and the character classification head vector $\overline{Y}$. For example, the incorrect character loss may be calculated according to formula (5) below based on the cross entropy between the character classification head vector $\overline{X}$ and the character classification head vector $\overline{Y}$. After the incorrect character loss is determined, one time of parameter adjustment is performed on the parameter of the font generation network 40 based on the incorrect character loss.

$$L_{cls}^{char}=-\sum_{i_0}^{n} x_i \log y_i \qquad (5).$$

$L_{cls}^{char}$ represents the incorrect character loss, $x_i$ represents an element with a subscript of i in the character classification header vector of the target domain sample character, and $y_i$ represents an element with a subscript of i in the character classification header vector of the target domain generation character. i is an integer which is greater than or equal to 0 and is less than or equal to m, and m represents the number of elements in the character classification header vector. In the embodiment, during the process of training the font generation model, the incorrect character loss is introduced to constrain the incorrect character rate of the target domain generation character output by the font generation network 40, thereby reducing the probability of the font generation model generating incorrect characters.

It should be noted that in the embodiment, at least one of the preceding four losses may be generated to adjust the parameter of the font generation model to complete the training of the font generation model.

It should further be noted that for ease of differentiation, the embodiment uses the parameter with * to indicate that the parameter is associated with the model-generated image and the parameter without * to indicate that the parameter is associated with the actual image.

In the solution of the embodiment of the present disclosure, during the process of training the font generation model, multiple types of losses are introduced. In this way, the training of the model is jointly constrained by the multiple types of losses, so that the accuracy of model training is greatly improved.

FIG. 5 is a flowchart of a method for establishing a font library according to an embodiment of the present disclosure. The embodiment of the present disclosure is applicable to the case of constructing a font library based on the font generation model trained in the preceding embodiments. The method may be performed by an apparatus for establishing a font library. The apparatus may be implemented by means of software and/or hardware. As shown in FIG. 5, the method for establishing a font library provided by the embodiment may include steps described below.

In step S501, a source domain input character is input into a font generation model to obtain a target domain new character.

The font generation model may be a font generation model trained on the basis of the preceding embodiments.

For example, the source domain input character is an image of a character of the Song font, and the new character is an image of a character of the handwriting style. The image of the character of the Song font is input into the font generation model, and the image of the character of the handwriting style can be obtained.

In step S502, the font library is established based on the target domain new character.

In the embodiment, the new character generated by the font generation model may be stored, and a font library having the handwriting font style is established. The font library may be applied to an input method, and a user can directly obtain characters of the handwriting font style by using the input method based on the font library. In this way, diverse requirements of the user are satisfied, and the user experience is improved.

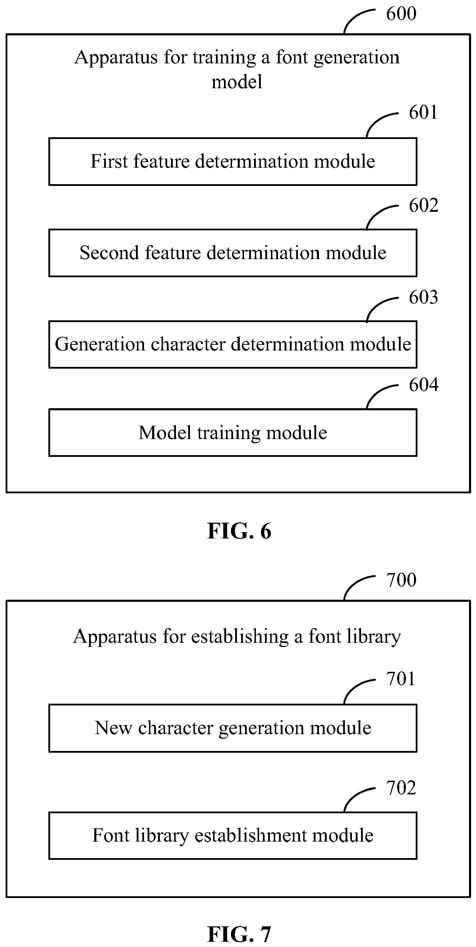

FIG. 6 is a structural diagram of an apparatus for training a font generation model according to an embodiment of the present disclosure. The embodiment of the present disclosure is applicable to the case of training a font generation model for performing the task of font style transfer, and in particular, to the case of training a font generation model for performing the task of font style transfer based on a small amount of sample data. The apparatus may be implemented by software and/or hardware, and the apparatus can implement the method for training a font generation model of any embodiment of the present disclosure. As shown in FIG. 6, the apparatus for training a font generation model includes a first feature determination module 601, a second feature determination module 602, a generation character determination module 603 and a model training module 604.

The first feature determination module 601 is configured to input a source domain sample character and a target domain association character of the source domain sample character into an encoder of the font generation model to obtain a sample character content feature and an association character style feature.

The second feature determination module 602 is configured to input the sample character content feature and the association character style feature into an attention mechanism network of the font generation model to obtain a target domain style feature.

The generation character determination module 603 is configured to input the sample character content feature and the target domain style feature into a decoder of the font generation model to obtain a target domain generation character.

The model training module 604 is configured to input the target domain generation character and at least one of a target domain sample character or the target domain association character into a loss analysis network of the font generation model to obtain a model loss, and adjust a parameter of the font generation model according to the model loss.

In the solution of the embodiment of the present disclosure, during the process of training the font generation model, the association character style feature of the target domain and the sample character content feature which are determined based on the encoder need to be input into the attention mechanism network to determine the target domain style feature, and the target domain generation character is obtained based on the target domain style feature and the sample character content feature. Then, the model loss is calculated based on the target domain generation character and at least one of the target domain sample character or the target domain association character to adjust the parameter of the model. In the solution, during the process of training the font generation model to perform the task of font style transfer between the source domain and the target domain, the attention mechanism network is introduced to determine the overall style feature of the target domain, that is, the target domain style feature, so that the accuracy of the target domain style feature is improved. Further, the capability of the font generation model to perform font style transfer is improved. When less target domain sample data is provided, or the source domain font does not conform to the font distribution style, the beautiful and correct font still can be generated, so that the accuracy of the model is improved. In this way, a new idea is provided for training a font generation model with a few samples.

Further, the preceding attention mechanism network includes a content feature perceptual layer, a style feature perceptual layer, an activation layer and a fully connected layer.

Correspondingly, the second feature determination module 602 is specifically configured to perform steps described below.

The sample character content feature is input into the content feature perceptual layer to obtain a content perceptual value.

The association character style feature is input into the style feature perceptual layer to obtain a style perceptual value.

The content perceptual value and the style perceptual value are input into the activation layer to obtain a feature weight of the target domain.

The feature weight and the association character style feature are input into the fully connected layer to obtain the target domain style feature.

Further, the preceding loss analysis network includes: at least one of a component classifier, a character discriminator, a style discriminator or a character classifier; and the model loss includes: at least one of a component classification loss, a character classification loss, a style classification loss or an incorrect character loss.

Further, the preceding model training module 604 includes a first character loss calculation unit, a character discriminator adjustment unit, a second character loss calculation unit and a font generation network adjustment unit.

The first character loss calculation unit is configured to input the target domain sample character and the target domain generation character into the character discriminator to obtain a first character loss value of the character classification loss.

The character discriminator adjustment unit is configured to adjust a parameter of the character discriminator based on the first character loss value.

The second character loss calculation unit is configured to input the target domain generation character into the adjusted character discriminator to obtain a second character loss value of the character classification loss.

The font generation network adjustment unit is configured to adjust a parameter of a font generation network based on the second character loss value, where the font generation network includes an encoder, an attention mechanism network and a decoder.

The first character loss calculation unit is further configured to input the target domain sample character and a target domain generation character updated based on the adjusted font generation network into the adjusted character discriminator to update the first character loss value.

The character discriminator adjustment unit is further configured to readjust the parameter of the character discriminator based on the updated first character loss value.

Further, the preceding first character loss calculation unit is specifically configured to perform steps described below.

The target domain sample character and the target domain generation character are input into the character discriminator to obtain a character classification head position of the target domain generation character and a character classification head position of the target domain sample character.

The first character loss value of the character classification loss is determined according to the character classification head position of the target domain generation character and the character classification head position of the target domain sample character.

Further, the preceding second character loss calculation unit is specifically configured to perform steps described below.

The target domain generation character is input into the adjusted character discriminator to update a character classification head position of the target domain generation character.

The second character loss value of the character classification loss is determined according to the updated character classification head position.

Further, the preceding model training module 604 further includes a first style loss calculation unit, a style discriminator adjustment unit, a second style loss calculation unit and a font generation network adjustment unit.

The first style loss calculation unit is configured to input the target domain sample character and the target domain generation character into the style discriminator to obtain a first style loss value of the style classification loss.

The style discriminator adjustment unit is configured to adjust a parameter of the style discriminator based on the first style loss value.

The second style loss calculation unit is configured to input the target domain generation character into the adjusted style discriminator to obtain a second style loss value of the style classification loss.

The font generation network adjustment unit is configured to adjust a parameter of a font generation network based on the second style loss value, where the font generation network includes an encoder, an attention mechanism network and a decoder.

The preceding first style loss calculation unit is further configured to input the target domain sample character and a target domain generation character updated based on the adjusted font generation network into the adjusted style discriminator to update the first style loss value.

The preceding style discriminator adjustment unit is further configured to readjust the parameter of the style discriminator based on the updated first style loss value.

Further, the preceding first style loss calculation unit is specifically configured to perform steps described below.

The target domain sample character and the target domain generation character are input into the style discriminator to obtain a style classification head position of the target domain generation character and a style classification head position of the target domain sample character.

The first style loss value of the style classification loss is determined according to the style classification head position of the target domain generation character and the style classification head position of the target domain sample character.

Further, the preceding second style loss calculation unit is specifically configured to perform steps described below.

The target domain generation character is input into the adjusted style discriminator to update a style classification head position of the target domain generation character.

The second style loss value of the style classification loss is determined according to the updated style classification head position.

Further, the preceding model training module 604 further includes a component classification loss calculation unit.

The component classification loss calculation unit is configured to input the target domain association character and the target domain generation character into the component classifier to obtain a component vector of the target domain generation character and a component vector of the target domain association character, and determine the component classification loss according to the difference between the component vector of the target domain generation character and the component vector of the target domain association character.

Further, the preceding model training module 604 further includes an incorrect character loss calculation unit.

The incorrect character loss calculation unit is configured to input the target domain sample character and the target domain generation character into the character classifier to obtain a character classification head vector of the target domain sample character and a character classification head vector of the target domain generation character, and determine the incorrect character loss according to the difference between the character classification head vector of the target domain sample character and the character classification head vector of the target domain generation character.

FIG. 7 is a structural diagram of an apparatus for establishing a font library according to an embodiment of the present disclosure. The embodiment of the present disclosure is applicable to the case of constructing a font library based on the font generation model trained in the preceding embodiments. The apparatus may be implemented by software and/or hardware, and the apparatus can implement the method for establishing a font library of any embodiment of the present disclosure. As shown in FIG. 7, the apparatus for establishing a font library includes a new character generation module 701 and a font library establishment module 702.

The new character generation module 701 is configured to input a source domain input character into a font generation model to obtain a target domain new character.

The font library establishment module 702 is configured to establish the font library based on the target domain new character.

The font generation model is obtained by training according to the method for training a font generation model of any embodiment of the present disclosure.

In the embodiment, the new character generated by the font generation model may be stored, and a font library having the handwriting font style is established. The font library may be applied to an input method, and a user can directly obtain characters of the handwriting font style by using the input method based on the font library. In this way, diverse requirements of the user are satisfied, and the user experience is improved.

The preceding products may perform the method provided by any embodiment of the present disclosure, and has functional modules and beneficial effects corresponding to the performed method.

It should be noted that in the technical solutions of the present disclosure, the collection, storage, use, processing, transmission, provision, and disclosure of font images involved are in compliance with provisions of relevant laws and regulations, and do not violate public order and good customs.

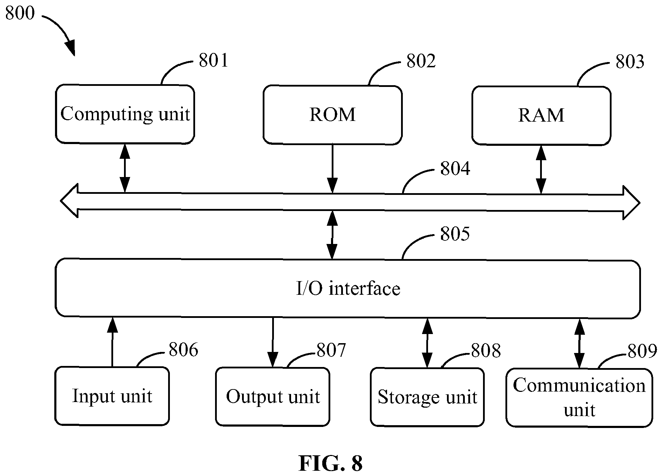

FIG. 8 is a block diagram of an exemplary electronic device 800 that may be configured to implement the embodiments of the present disclosure. Electronic devices are intended to represent various forms of digital computers, for example, laptop computers, desktop computers, worktables, personal digital assistants, servers, blade servers, mainframe computers and other applicable computers. Electronic devices may further represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 8, the device 800 includes a computing unit 801. The computing unit 801 may perform various types of appropriate operations and processing based on a computer program stored in a read-only memory (ROM) 802 or a computer program loaded from a storage unit 808 to a random-access memory (RAM) 803. Various programs and data required for operations of the device 800 may also be stored in the RAM 803. The computing unit 801, the ROM 802 and the RAM 803 are connected to each other through a bus 804. An input/output (I/O) interface 805 is also connected to the bus 804.

Multiple components in the device 800 are connected to the I/O interface 805. The components include an input unit 806 such as a keyboard and a mouse, an output unit 807 such as various types of displays and speakers, the storage unit 808 such as a magnetic disk and an optical disc, and a communication unit 809 such as a network card, a modem and a wireless communication transceiver. The communication unit 809 allows the device 800 to exchange information/data with other devices over a computer network such as the Internet and/or various telecommunications networks.

The computing unit 801 may be various general-purpose and/or special-purpose processing components having processing and computing capabilities. Examples of the computing unit 801 include, but are not limited to, a central processing unit (CPU), a graphics processing unit (GPU), a special-purpose artificial intelligence (AI) computing chip, a computing unit executing machine learning models and algorithms, a digital signal processor (DSP) and any appropriate processor, controller and microcontroller. The computing unit 801 performs various methods and processing described above, such as the method for training a font generation model and/or the method for establishing a font library. For example, in some embodiments, the method for training a font generation model and/or the method for establishing a font library may be implemented as a computer software program tangibly contained in a machine-readable medium such as the storage unit 808. In some embodiments, part or all of computer programs may be loaded and/or installed on the device 800 via the ROM 802 and/or the communication unit 809. When the computer programs are loaded into the RAM 803 and performed by the computing unit 801, one or more steps of the preceding method for training a font generation model and/or the method for establishing a font library may be performed. Alternatively, in other embodiments, the computing unit 801 may be configured, in any other suitable manner (for example, by means of firmware), to perform the method for training a font generation model and/or the method for establishing a font library.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SOCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting the data and instructions to the memory system, the at least one input apparatus, and the at least one output apparatus.

Program codes for implementing the methods of the present disclosure may be compiled in any combination of one or more programming languages. The program codes may be provided for the processor or controller of a general-purpose computer, a special-purpose computer, or another programmable data processing apparatus to enable functions/operations specified in flowcharts and/or block diagrams to be implemented when the program codes are executed by the processor or controller. The program codes may be executed in whole on a machine, executed in part on a machine, executed, as a stand-alone software package, in part on a machine and in part on a remote machine, or executed in whole on a remote machine or a server.

In the context of the present disclosure, a machine-readable medium may be a tangible medium that may include or store a program that is used by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disk read-only memory (CD-ROM), an optical memory device, a magnetic memory device, or any suitable combination thereof.

In order that interaction with a user is provided, the systems and techniques described herein may be implemented on a computer. The computer has a display apparatus (for example, a cathode-ray tube (CRT) or a liquid-crystal display (LCD) monitor) for displaying information to the user and a keyboard and a pointing apparatus (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. The clients and servers are usually far away from each other and generally interact through the communication network. The relationship between the clients and the servers arises by virtue of computer programs running on respective computers and having a client-server relationship to each other. The server may be a cloud server, also referred to as a cloud computing server or a cloud host. As a host product in a cloud computing service system, the server solves the defects of difficult management and weak business scalability in conventional physical hosts and VPS services. The server may also be a server of a distributed system, or a server combined with a blockchain.

Artificial intelligence is the study of making computers simulate certain human thinking processes and intelligent behaviors (such as learning, reasoning, thinking and planning) both at the hardware and software levels. Artificial intelligence hardware technologies generally include technologies such as sensors, special-purpose artificial intelligence chips, cloud computing, distributed storage and big data processing. Artificial intelligence software technologies mainly include several major technologies such as computer vision technologies, speech recognition technologies, natural language processing technologies, machine learning/deep learning technologies, big data processing technologies and knowledge mapping technologies.

Cloud computing refers to a technical system that accesses a shared elastic-and-scalable physical or virtual resource pool through a network, where resources may include servers, operating systems, networks, software, applications and storage devices, and may be deployed and managed in an on-demand, self-service manner by cloud computing. Cloud computing can provide efficient and powerful data processing capabilities for artificial intelligence, the blockchain and other technical applications and model training.

It is to be understood that various forms of the preceding flows may be used with steps reordered, added, or removed. For example, the steps described in the present disclosure may be executed in parallel, in sequence or in a different order as long as the desired result of the technical solutions disclosed in the present disclosure is achieved. The execution sequence of these steps is not limited herein.

## Claims

1. A method for training a font generation model, comprising:

    inputting (S201, S301, S401) a source domain sample character and a target domain association character of the source domain sample character into an encoder of the font generation model to obtain a sample character content feature and an association character style feature;
    inputting (S202, S402) the sample character content feature and the association character style feature into an attention mechanism network of the font generation model to obtain a target domain style feature;
    inputting (S203, S306, S403) the sample character content feature and the target domain style feature into a decoder of the font generation model to obtain a target domain generation character; and
    inputting (S204, S307) the target domain generation character and at least one of a target domain sample character or the target domain association character into a loss analysis network of the font generation model to obtain a model loss, and adjusting a parameter of the font generation model according to the model loss.

2. The method according to claim 1, wherein the attention mechanism network comprises: a content feature perceptual layer, a style feature perceptual layer, an activation layer and a fully connected layer; and
    inputting (S202) the sample character content feature and the association character style feature into the attention mechanism network of the font generation model to obtain the target domain style feature comprises:

    inputting (S302) the sample character content feature into the content feature perceptual layer to obtain a content perceptual value;
    inputting (S303) the association character style feature into the style feature perceptual layer to obtain a style perceptual value;
    inputting (S304) the content perceptual value and the style perceptual value into the activation layer to obtain a feature weight of a target domain; and
    inputting (S305) the feature weight and the association character style feature into the fully connected layer to obtain the target domain style feature.

3. The method according to claim 1, wherein the loss analysis network comprises: at least one of a component classifier, a character discriminator, a style discriminator or a character classifier; and the model loss comprises: at least one of a component classification loss, a character classification loss, a style classification loss or an incorrect character loss.

4. The method according to claim 3, wherein inputting the target domain generation character and the at least one of the target domain sample character or the target domain association character into the loss analysis network of the font generation model to obtain the model loss, and adjusting the parameter of the font generation model according to the model loss comprises:

    inputting the target domain sample character and the target domain generation character into the character discriminator to obtain a first character loss value of the character classification loss, and adjusting a parameter of the character discriminator based on the first character loss value;
    inputting the target domain generation character into the adjusted character discriminator to obtain a second character loss value of the character classification loss, and adjusting a parameter of a font generation network based on the second character loss value, wherein the font generation network comprises the encoder, the attention mechanism network and the decoder; and
    inputting the target domain sample character and a target domain generation character updated based on the adjusted font generation network into the adjusted character discriminator to update the first character loss value, and readjusting the parameter of the character discriminator based on the updated first character loss value.

5. The method according to claim 4, wherein inputting the target domain sample character and the target domain generation character into the character discriminator to obtain the first character loss value of the character classification loss comprises:

inputting the target domain sample character and the target domain generation character into the character discriminator to obtain a character classification head position of the target domain generation character and a character classification head position of the target domain sample character; and

determining the first character loss value of the character classification loss according to the character classification head position of the target domain generation character and the character classification head position of the target domain sample character.

6. The method according to claim 4, wherein inputting the target domain generation character into the adjusted character discriminator to obtain the second character loss value of the character classification loss comprises:

inputting the target domain generation character into the adjusted character discriminator to update a character classification head position of the target domain generation character; and

determining the second character loss value of the character classification loss according to the updated character classification head position.

7. The method according to claim 3, wherein inputting the target domain generation character and the at least one of the target domain sample character or the target domain association character into the loss analysis network of the font generation model to obtain the model loss, and adjusting the parameter of the font generation model according to the model loss comprises:

inputting the target domain sample character and the target domain generation character into the style discriminator to obtain a first style loss value of the style classification loss, and adjusting a parameter of the style discriminator based on the first style loss value;

inputting the target domain generation character into the adjusted style discriminator to obtain a second style loss value of the style classification loss, and adjusting a parameter of a font generation network based on the second style loss value, wherein the font generation network comprises an encoder, an attention mechanism network and a decoder; and

inputting the target domain sample character and a target domain generation character updated based on the adjusted font generation network into the adjusted style discriminator to update the first style loss value, and readjusting the parameter of the style discriminator based on the updated first style loss value.

8. The method according to claim 7, wherein inputting the target domain sample character and the target domain generation character into the style discriminator to obtain the first style loss value of the style classification loss comprises:

inputting the target domain sample character and the target domain generation character into the style discriminator to obtain a style classification head position of the target domain generation character and a style classification head position of the target domain sample character; and

determining the first style loss value of the style classification loss according to the style classification head position of the target domain generation character and the style classification head position of the target domain sample character.

9. The method according to claim 7, wherein inputting the target domain generation character into the adjusted style discriminator to obtain the second style loss value of the style classification loss comprises:

inputting the target domain generation character into the adjusted style discriminator to update a style classification head position of the target domain generation character; and

determining the second style loss value of the style classification loss according to the updated style classification head position.

10. The method according to claim 3, wherein inputting the target domain generation character and the at least one of the target domain sample character or the target domain association character into the loss analysis network of the font generation model to obtain the model loss comprises:

inputting the target domain association character and the target domain generation character into the component classifier to obtain a component vector of the target domain generation character and a component vector of the target domain association character; and

determining the component classification loss according to a difference between the component vector of the target domain generation character and the component vector of the target domain association character.

**11.** The method according to claim 3, wherein inputting the target domain generation character and the at least one of the target domain sample character or the target domain association character into the loss analysis network of the font generation model to obtain the model loss comprises:

inputting the target domain sample character and the target domain generation character into the character classifier to obtain a character classification head vector of the target domain sample character and a character classification head vector of the target domain generation character; and
determining the incorrect character loss according to a difference between the character classification head vector of the target domain sample character and the character classification head vector of the target domain generation character.

**12.** A method for establishing a font library, comprising:

inputting (S501) a source domain input character into a font generation model to obtain a target domain new character; and
establishing (S502) the font library based on the target domain new character;
wherein the font generation model is obtained by training according to the method of any one of claims 1 to 11.

**13.** An apparatus (600) for training a font generation model, comprising:

a first feature determination module (601), which is configured to input a source domain sample character and a target domain association character of the source domain sample character into an encoder of the font generation model to obtain a sample character content feature and an association character style feature;
a second feature determination module (602), which is configured to input the sample character content feature and the association character style feature into an attention mechanism network of the font generation model to obtain a target domain style feature;
a generation character determination module (603), which is configured to input the sample character content feature and the target domain style feature into a decoder of the font generation model to obtain a target domain generation character; and
a model training module (604), which is configured to input the target domain generation character and at least one of a target domain sample character or the target domain association character into a loss analysis network of the font generation model to obtain a model loss, and adjust a parameter of the font generation model according to the model loss.

**14.** An apparatus (700) for establishing a font library, comprising:

a new character generation module (701), which is configured to input a source domain input character into a font generation model to obtain a target domain new character; and
a font library establishment module (702), which is configured to establish the font library based on the target domain new character;
wherein the font generation model is obtained according to the apparatus of claim 13.

**15.** An electronic device, comprising:

at least one processor; and
a memory communicatively connected to the at least one processor;
wherein the memory stores instructions executable by the at least one processor, and the instructions are executed by the at least one processor to cause the at least one processor to perform the method for training a font generation model of any one of claims 1 to 11, and/or perform the method for establishing a font library of claim 12.

**16.** A computer-readable storage medium storing computer instructions for causing a computer to perform the method for training a font generation model of any one of claims 1 to 11, and/or perform the method for establishing a font library method of claim 12.

**17.** A computer program product, comprising a computer program which, when executed by a processor, implements the method for training a font generation model of any one of claims 1 to 11, and/or implements the method for establishing a font library of claim 12.

100

101

101

101

102

103

**FIG. 1**

S201

Input a source domain sample character and a target domain association character of the source domain sample character into an encoder network of the font generation model to obtain a sample character content feature and an association character style feature

S202

Input the sample character content feature and the association character style feature into an attention mechanism network of the font generation model to obtain the target domain style feature

S203

Input the sample character content feature and the target domain style feature into a decoder network of the font generation model to obtain a target domain generation character

S204

Input the target domain generation character and at least one of a target domain sample character or the target domain association character into a loss analysis network of the font generation model to obtain a model loss, and adjust a parameter of the font generation model according to the model loss

**FIG. 2A**

**FIG. 2B**

**FIG. 3A**

S301

Input a source domain sample character and a target domain association character of the source domain sample character into an encoder of the font generation model to obtain a sample character content feature and an association character style feature

S302

Input the sample character content feature into the content feature perceptual layer to obtain a content perceptual value

S303

Input the association character style feature into the style feature perceptual layer to obtain a style perceptual value

S304

Input the content perceptual value and the style perceptual value into the activation layer to obtain a feature weight of the target domain

S305

Input the feature weight and the association character style feature into the fully connected layer to obtain the target domain style feature

S306

Input the sample character content feature and the target domain style feature into a decoder of the font generation model to obtain a target domain generation character

S307

Input the target domain generation character and at least one of a target domain sample character or the target domain association character into a loss analysis network of the font generation model to obtain a model loss, and adjust a parameter of the font generation model according to the model loss

**FIG. 3B**

**FIG. 4A**

S401

Input a source domain sample character and a target domain association character of the source domain sample character into an encoder of the font generation model to obtain a sample character content feature and an association character style feature

S402

Input the sample character content feature and the association character style feature into an attention mechanism network of the font generation model to obtain a target domain style feature

S403

Input the sample character content feature and the target domain style feature into a decoder of the font generation model to obtain a target domain generation character

S404

Input the target domain generation character and at least one of a target domain sample character or the target domain association character into the loss analysis network of the font generation model to obtain at least one of the component classification loss, the character classification loss, the style classification loss or the incorrect character loss, and adjust the parameter of the font generation model according to at least one of the component classification loss, the character classification loss, the style classification loss or the incorrect character loss

**FIG. 4B**

S501

Input a source domain input character into a font generation model to obtain a target domain new character

S502

Establish the font library based on the target domain new character

**FIG. 5**

600

**Apparatus for training a font generation model**

601

First feature determination module

602

Second feature determination module

603

Generation character determination module

604

Model training module

**FIG. 6**

700

**Apparatus for establishing a font library**

701

New character generation module

702

Font library establishment module

**FIG. 7**

800

801
Computing unit

802
ROM

803
RAM

804

805
I/O interface

806
Input unit

807
Output unit

808
Storage unit

809
Communication unit

**FIG. 8**

Europäisches
Patentamt

European
Patent Office

Office européen
des brevets

# EUROPEAN SEARCH REPORT

Application Number

EP 22 15 9078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUSEN TANG ET AL: "Write Like You: Synthesizing Your Cursive Online Chinese Handwriting via Metric-based Meta Learning", COMPUTER GRAPHICS FORUM : JOURNAL OF THE EUROPEAN ASSOCIATION FOR COMPUTER GRAPHICS, WILEY-BLACKWELL, OXFORD, vol. 40, no. 2, 4 June 2021 (2021-06-04), pages 141-151, XP071554270, ISSN: 0167-7055, DOI: 10.1111/CGF.142621 * abstract * * page 142 – page 149 * * figure 2 * | 1-17 | INV. G06V10/44 G06V30/19 G06V30/244 G06F40/109 |
| A | SONG PARK ET AL: "Few-shot Font Generation with Localized Style Representations and Factorization", ARXIV.ORG, CORNELL UNIVERSITY LIBRARY, 201 OLIN LIBRARY CORNELL UNIVERSITY ITHACA, NY 14853, 23 September 2020 (2020-09-23), XP081769513, * abstract * * page 1 – page 6 * * figure 2 * | 1-17 | TECHNICAL FIELDS SEARCHED (IPC) G06V |

The present search report has been drawn up for all claims

| Place of search | Date of completion of the search | Examiner |
|---|---|---|
| The Hague | 20 July 2022 | Karwe, Markus |

EPO FORM 1503 03.82 (P04C01)